# EUROPÄISCHE PATENTANMELDUNG

(11) **EP 1 138 536 A2**
(43) Veröffentlichungstag der Anmeldung: **04.10.2001**
(21) Anmeldenummer: 01108122.1
(22) Anmeldetag: 30.03.2001
(51) Int. Cl.: B60J 7/02

(54) **Dachmodul zum Einsetzen in ein Fahrzeugdach und entsprechendes Herstellungsverfahren**

(30) Priorität: 30.03.2000 DE 10015504
(71) Anmelder: Webasto Vehicle Systems International GmbH, 82131 Stockdorf (DE)
(72) Erfinder: Lante, Tobias Christoph, 38179 Gross Schwülper (DE)
(74) Vertreter: Wiese, Gerhard

(57) **Zusammenfassung**

Ein Aspekt der Erfindung betrifft ein Dachmodul zum Einsetzen in ein Fahrzeugdach, mit einer Dachhaut (12) aus Kunststoff, wobei rahmenförmigen Teile (16, 18) mit Kreuzversteifungen (32) in die Dachhaut (12) integriert sind. Ein anderer Aspekt der Erfindung betrifft ein Verfahren zum Herstellen eines solchen Dachmoduls wobei die rahmenförmigen Teile (16, 18) oder weitere zusätzliche Verstärkungselemente in eine Spritzgußform für die Dachhaut (12) eingelegt werden und danach mit in die Form eingespritztem Kunststoff mindestens zum Teil umschlossen werden.

## Beschreibung

Die vorliegende Erfindung betrifft ein Dachmodul zum Einsetzen in ein Fahrzeugdach gemäß dem Oberbegriff von Anspruch 1, insbesondere ein Dachmodul für ein öffnungsfähiges Fahrzeugdach, sowie ein entsprechendes Herstellungsverfahren.

Ein gattungsgemäßes Dachmodul ist aus DE 89 15 862 U1 bekannt, das als Rahmen für ein Schiebedach ausgebildet ist und zu diesem Zweck mit einer Öffnung für einen Schiebedeckel versehen ist. Zu beiden Seiten des Schiebedeckels sind Ausnehmungen vorgesehen, in welche jeweils eine Führungsschiene aus Leichtmetall zum Führen des Deckels eingepreßt ist. Nachteilig bei diesem Dachmodul ist, daß einerseits in der Kunststoff-Dachhaut spezielle Ausnehmungen ausgebildet sein müssen und andererseits das Einpressen der Führungsschienen einen zusätzlichen Arbeitsschritt erfordert.

Aus DE 42 38 714 C1 ist ein Deckel für ein öffnungsfähiges Fahrzeugdach bekannt, bei welchem eine Glasscheibe mit einem angespritzten Kunststoffrahmen versehen ist, in welchen an der Deckelunterseite umlaufende Verstärkungsbleche eingespritzt sind.

Ferner ist es aus der DE 197 09 016 C2 bei Dachmodulen mit einer Blechdachhaut und einem eingeschäumten PU-Teil bekannt, Verstärkungselemente durch den Schäumvorgang mit der Blechdachhaut zu verbinden. Ein derartiges Dachmodul meist aufgrund der Verwendung von Blech und einer vollvolumigen Ausschäumung mit einem Kunststoffmaterial ein relativ hohes Gewicht und eine relativ große Bauhöhe auf.

Es ist Aufgabe der vorliegenden Erfindung, ein Dachmodul zu schaffen, welches einfach herzustellen ist, eine hohe Stabilität aufweist und wenig Bauraum erfordert.

Diese Aufgabe wird erfindungsgemäß gelöst durch ein Dachmodul gemäß Anspruch 1 sowie ein entsprechendes Herstellungsverfahren gemäß Anspruch 10. Bevorzugte Ausgestaltungen der Erfindung ergeben sich aus den Unteransprüchen.

Die erfindungsgemäße Ausbildung der Verstärkungselemente als Kreuzversteifungen mit waffelförmig angeordneten Stegen, zwischen denen relativ große Hohlräume ausgebildet sind, ermöglicht eine besonders leichte aber dennoch in allen Richtungen formstabile Ausgestaltung, die insbesondere bei einer unmittelbaren Herstellung mit der Dachhaut im Spritzgussverfahren auch sehr einfach und kostengünstig herstellbar ist.

Im folgenden wird die Erfindung anhand der beigefügten Zeichnungen näher erläutert. Es zeigt:
Fig. 1 eine schematische Draufsicht auf ein erfindungsgemäßes Dachmodul;

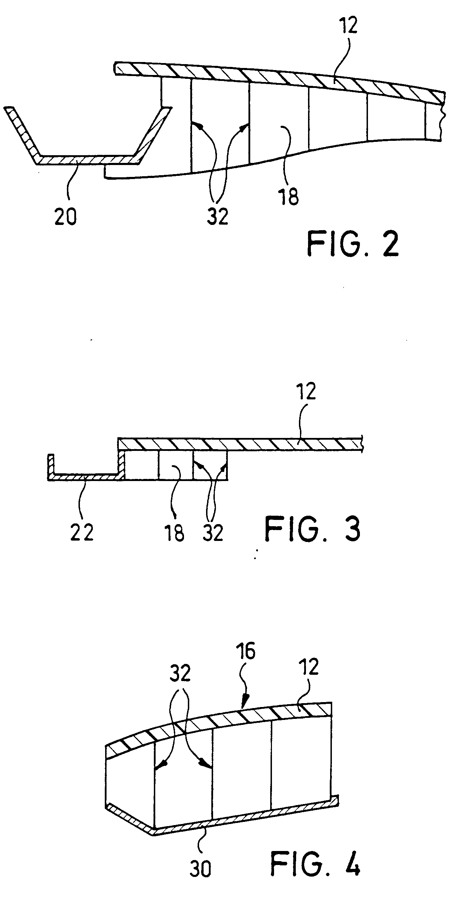

Fig. 2 einen Schnitt entlang der Linie II-II in Fig. 1;
Fig. 3 einen Schnitt entlang der Linie III-III in Fig. 1, und
Fig. 4 einen Schnitt entlang der Linie IV-IV in Fig. 1.

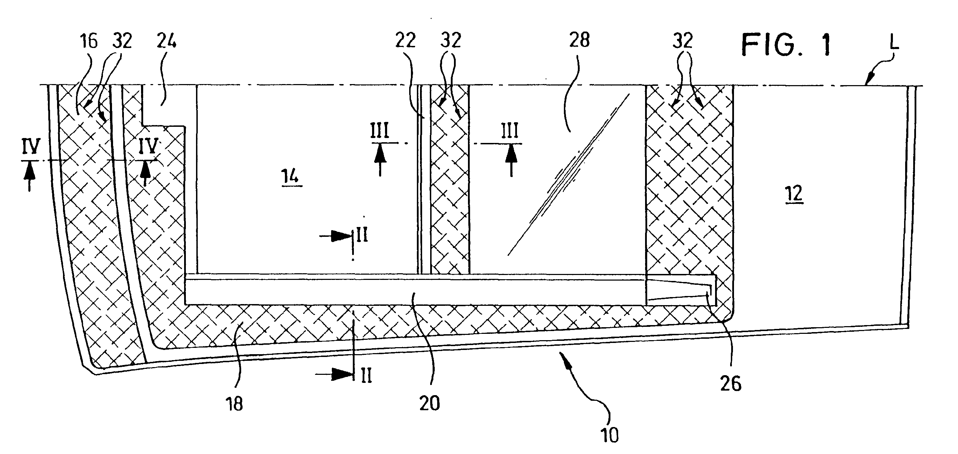

Das in Fig. 1 gezeigte erfindungsgemäße Dachmodul 10 wird in eine Öffnung in einer festen Dachhaut 12 oder direkt zwischen die nicht dargestellten, jedoch in Fig. 11 der eingangs genannten DE 197 09 016 C2 mit der Bezugszahl 4 gezeigten Seitenholme eines Fahrzeugs eingesetzt. Das Dachmodul 10 umfaßt die freiliegende Dachhaut 12 aus Kunststoff, die sich im wesentlichen über die gesamte Oberseite des Dachmoduls 10, mit Ausnahme einer Öffnung 14 für einen hier nicht gezeigten verstellbaren Deckel, z.B. einen Schiebedeckel oder ähnliches, erstreckt. Der wesentliche Aspekt des erfindungsgemäßen Dachmoduls 10 besteht darin, daß verschiedene nachfolgend erläuterte Verstärkungselemente in die Dachhaut 12 integriert sind, wobei dies vorzugsweise dadurch erfolgt, daß diese Verstärkungselemente in die Dachhaut 12 mit eingegossen sind. Dies kann so erfolgen, daß die Verstärkungselemente in eine Spritzgußform für die Dachhaut 12 eingelegt und danach von dem in die Form eingespritzten Kunststoff mindestens zum Teil umschlossen werden.

Im vorderen Bereich des Dachmoduls ist ein in Verbindung mit anderen Bauteilen rahmenförmiger Windlauf 16 vorgesehen, der mit einer stegartigen, waffelförmigen Kreuzversteifung 32 und mit einem unterhalb der Kreuzversteifung 32 integrierten Blech-oder Stahlholm 30 ausgebildet ist. Durch die Integration des Windlaufs 16 in die Dachhaut 12 kann das Blechteil für den Windlauf 16 einfacher und weniger fest ausgelegt werden, da die Kunststoffdachhaut 12 selbst mit ihrer integrierten Kreuzversteifung 32 zu einem gewissen Teil zur Steifigkeit im Bereich des Windlaufs 16 beiträgt. Dadurch wird der Bauraumbedarf des Windlaufs 16 verringert.

Ferner umfaßt das Dachmodul 10 weitere Verstärkungselemente, die ebenfalls als Kreuzversteifungen 32 ausgebildet sind und die Dachhaut 12 in Form eines parallel zur Fahrzeuglängsrichtung L und quer dazu verlaufenden Rahmens 18 verstärken. Insbesondere umgibt der Rahmen 18 einerseits die Öffnung 14 für den Deckel, wobei dieser entlang einer Führungsschiene 20 verschiebbar geführt ist, die einen Teil des Verstärkungsrahmens 18 bildet bzw. an diesem befestigt ist. Die Führungsschiene 20 kann jedoch auch separat in die Dachhaut 12 integriert sein. Am hinteren Rand der Öffnung 14 ist eine Wasserrinne 22 vorgesehen, die an dem Verstärkungsrahmen 18 befestigt sein kann, einen Teil desselben bilden kann oder separat in die Dachhaut 12 integriert sein kann. Die Wasserrinne 22 dient dazu, beim Öffnen des die Öffnung 14 verschließenden bzw. diese wahlweise freigebenden Deckels abtropfendes Wasser aufzufangen und so daran zu hindern, in den Fahrzeuginnenraum einzudringen.

Im vorderen Bereich des Verstärkungsrahmens 18 ist ein Bereich 24 vorgesehen, der zur Anbindung an einen Elektromotor zum Verstellen des Deckels dient. Im hinteren Bereich des Verstärkungsrahmens 18 ist ein Wasserablauf 26 vorgesehen.

Hinter der Öffnung 14 ist eine Fläche 28 der Dachhaut 12 vorgesehen, welche transparent ausgebildet sein kann, um in diesem Bereich Licht in den Fahrzeuginnenraum gelangen zu lassen.

Aus den Figuren ist ersichtlich, daß die Kreuzversteifungen 32 als Verstärkungselement des Verstärkungsrahmens 18 mit ihren Rippen oder Stegen bevorzugt in Form einer Kreuzstruktur ausgebildet sind, die sich von der Dachhaut 12 aus nach unten erstrecken. Die Kreuzversteifungen 32 sind vorzugsweise im Spritzgussverfahren unmittelbar unten an die Dachhaut 12 angeformt. Vorzugsweise sind weitere Verstärkungselemente als Blech-oder Stahlholme, wie ein Stahlholm 30 am Windlauf 16, die Führungsschienen 20 oder Wasserrinnen 22 beim Spritzgussverfahren mit in die Dachhaut 12 bzw. das Dachmodul 10 integriert.

Im geschilderten Beispiel bilden der Windlauf 16 und die Verstärkungselemente (Führungsschienen 20, Wasserrinne 22, Stahlholm 30, Kreuzversteifungen 32) Funktionselemente, welche in die Dachhaut 12 integriert sind, wobei dies bei der Herstellung vorzugsweise dadurch erfolgt, daß diese Elemente in eine Spritzgußform für die Dachhaut eingelegt werden und danach zum Teil, d.h. vorliegend in ihrem oberen Abschnitt, mit in die Form eingespritztem Kunststoff umschlossen werden. Falls erforderlich, können die Funktionselemente jedoch auch vollständig von dem Kunststoff der Dachhaut 12 umschlossen sein.

Die Kreuzversteifungen 32 sind bevorzugt unter einem Winkel von 45 Grad zur Fahrzeuglängsachse L bzw. zur Fahrzeugquerachse angeordnet. Zwischen ihren Stegen befinden sich somit rautenförmige oder quadratische Hohlräume. Durch eine derartige Anordnung ergibt sich eine hohe Stabilität in allen Belastungsrichtungen bei gleichzeitig sehr geringem Gewicht des Dachmoduls 10.

Alternativ zu Verstärkungsteilen aus Blech oder Stahl können auch Verstärkungsteile aus Kunststoff verwendet werden. Als Materialien hierfür eignen sich insbesondere Polymethylmetacrylat (PMMA), Acrylnitril/Styrol/Acrylester (ASA), Polycarbonat (PC), Acrylnitril/Butadien/Styrol (ABS), Polybutylenterphtalat (PBT), Polyurethan (PU), vorzugsweise mit Glasfasern (GF) verstärkt, oder Polypropylen (PP).

### Bezugszeichenliste

- 10: Dachmodul
- 12: Dachhaut
- 14: Öffnung
- 16: Windlauf
- 18: Rahmen
- 20: Führungsschienen
- 22: Wasserrinne
- 24: Bereich (zu Anbringung eines Elektromotors)
- 26: Wasserablauf
- 28: (Transparente) Fläche
- 30: Stahlholm
- 32: Kreuzversteifungen

## Patentansprüche

1. Dachmodul zum Einsetzen in ein Fahrzeugdach, mit einer Dachhaut (12) aus Kunststoff und mit in die Dachhaut (12) integrierten rahmenförmigen Teilen (16, 18) mit eingebetteten Verstärkungselementen (20, 30, 32), **dadurch gekennzeichnet, daß** die Verstärkungselemente als Kreuzversteifungen (32) ausgebildet sind.

2. Dachmodul gemäß Anspruch 1, **dadurch gekennzeichnet, daß** die Verstärkungselemente (20, 30, 32) in die Dachhaut (12) mit eingegossen sind.

3. Dachmodul gemäß Anspruch 2, **dadurch gekennzeichnet, daß** die Dachhaut (12) mittels Spritzguß hergestellt ist.

4. Dachmodul nach einem der vorhergehenden Ansprüche, **dadurch gekennzeichnet, daß** die Kreuzversteifungen (32) als waffelförmige Stege an der Unterseite der Dachhaut (12) ausgebildet sind.

5. Dachmodul nach Anspruch 4, **dadurch gekennzeichnet, daß** die Stege der Kreuzversteifungen (32) unter einem Winkel von vorzugsweise 45 Grad zur Fahrzeuglängsrichtung (L) verlaufen.

6. Dachmodul gemäß einem der vorhergehenden Ansprüche, **dadurch gekennzeichnet, daß** die rahmenförmigen Teile (16, 18) zusätzlich zu den Kreuzversteifungen (32) weitere Verstärkungselemente (20, 30) umfassen.

7. Dachmodul gemäß Anspruch 6, **dadurch gekennzeichnet, daß** die Verstärkungselemente als Führungsschienen (20) für ein verstellbares Abdeckelement ausgebildet sind.

8. Dachmodul gemäß Anspruch 6, **dadurch gekennzeichnet, daß** die Verstärkungselemente als Blech- oder Stahlholme (30) ausgebildet sind.

9. Dachmodul gemäß einem der vorhergehenden Ansprüche, **dadurch gekennzeichnet, daß** eines der rahmenförmigen Teile als Windlauf (16) am vorderen Ende der Dachhaut (12) ausgebildet ist.

10. Verfahren zum Herstellen eines Dachmoduls gemäß wenigstens einem der vorhergehenden Anprüche, **dadurch gekennzeichnet, daß** die Verstärkungsteile (20, 30) in eine Spritzgußform für die Dachhaut (12) eingelegt werden und danach mit in die Form eingespritztem Kunststoff unter gleichzeitiger Ausbildung der Kreuzversteifungen (32) mindestens zum Teil umschlossen werden.
